Europäisches Patentamt

European Patent Office

Office européen des brevets

(19)

(11) Numéro de publication : **0 285 517 B1**

(12) # FASCICULE DE BREVET EUROPEEN

(45) Date de publication du fascicule du brevet :
06.11.91 Bulletin 91/45

(51) Int. Cl.⁵ : **G05G 1/04, G05G 7/04**

(21) Numéro de dépôt : **88400774.1**

(22) Date de dépôt : **30.03.88**

(54) **Dispositif de commande de transmission par câble, actionné par le pouce.**

(30) Priorité : 31.03.87 FR 8703373

(43) Date de publication de la demande :
05.10.88 Bulletin 88/40

(45) Mention de la délivrance du brevet :
06.11.91 Bulletin 91/45

(84) Etats contractants désignés :
AT BE CH DE ES FR GB GR IT LI LU NL SE

(56) Documents cités :
FR-A- 2 311 678
US-A- 4 614 130

(73) Titulaire : **SOCIETE DES TRACTEURS ET MOTOCULTEURS STAUB
54 rue de Lambrechts
F-92400 Courbevoie (FR)**

(72) Inventeur : **Vernier, Claude
70 rue des Sazières
F-92700 Colombes (FR)**

(74) Mandataire : **de Boisse, Louis Arnaud et al
CABINET de BOISSE 37, Avenue Franklin D.
Roosevelt
F-75008 Paris (FR)**

## Description

La présente invention est relative à un dispositif de commande de transmission par câble, actionné par le pouce de l'utilisateur.

On connaît depuis longtemps, par exemple sur des motocyclettes, des dispositifs de commande actionnés par le pouce, et reliés à des commandes de gaz, de décompresseurs, contacteurs électriques, etc.. L'utilisateur garde la main sur la poignée et peut donc actionner la manette de tels dispositifs sans cesser de contrôler fermement la direction.

De tels dispositifs, tels qu'ils sont de pratique courante, ont le défaut de ne transmettre que des forces peu importantes, largement suffisantes pour actionner un contacteur électrique par exemple, mais insuffisantes, en particulier, lorsqu'il s'agit d'actionner, par exemple, un mécanisme de clabotage ou d'embrayage de roues pour un motoculteur.

Dans ce cas, en effet, il existe dans le mécanisme ou à l'extrémité du câble opposée à la commande, un système à ressort de rappel puissant, et dont la force, de plus, croît avec le déplacement du câble de la commande, si bien que l'effort à fournir par l'utilisateur, relativement faible en début de course, devient, à la fin de celle-ci, prohibitif ou tout au moins susceptible d'entraîner une fatigue exagérée ou d'inciter l'utilisateur à lâcher la poignée, ce qui est dangereux.

Le but de l'invention est donc de fournir un dispositif qui permette de fournir un effort important, et variable, au niveau d'un appareillage, moyennant une pression du pouce modérée et variant peu pendant toute la trajectoire de celui-ci, tout en évitant un déplacement du pouce d'une ampleur telle qu'il serait incompatible avec le maintien du reste de la main sur la poignée, ce dispositif étant cependant simple et peu encombrant.

Pour obtenir ce résultat, l'invention fournit un dispositif de commande d'un appareillage, par un câble coulissant dans une gaine, comportant une poignée fixe, destinée à servir d'appui pour la paume de la main d'un utilisateur, cette poignée fixe pouvant être associée à une poignée mobile qui peut être actionnée par les autres doigts que le pouce, et comportant un poussoir susceptible d'être déplacé par le pouce de la même main, ce poussoir étant porté par un levier qui peut tourner sur un pivot solidaire de la poignée fixe de façon à faire décrire au poussoir un arc de cercle de dimension compatible avec la conformation de la main, entre une position extrême de repos et une position extrême active, le levier étant relié audit câble de commande dont la gaine vient en appui sur une butée solidaire de la poignée fixe, un ressort de rappel agissant sur les autres extrémités du câble et de la gaine opposant une force variable au déplacement du levier, ce dispositif ayant pour particularité que :

— le câble est accroché directement sur le levier,
— la position du point d'accrochage du câble sur le levier et la distance entre le pivot et la butée sont calculées de telle sorte que les distances du pivot au câble dans la position de repos et dans la position extrême active sont dans un rapport inverse des forces exercées par le ressort de rappel lorsque le levier est dans ladite position de repos et ladite position extrême active, si bien que la force que doit exercer le pouce est la même dans ces deux positions extrêmes.

L'invention va être exposée de façon plus détaillée à l'aide d'un exemple pratique, illustré par les dessins parmi lesquels :

Figure 1 est une vue en élévation, en coupe partielle, du dispositif de l'invention.

Figure 2 est un schéma de construction géométrique du dispositif.

Figure 3 est un diagramme de l'effort du pouce en fonction du déplacement de celui-ci.

Figure 4 est une vue en élévation du dispositif, associé à une poignée mobile.

Le dispositif comprend une poignée fixe 1 sur laquelle est monté un pivot 2, qui porte un levier 3, coudé qui porte, à son extrémité, un poussoir 4 destiné à coopérer avec le pouce, et, à peu près à mi-distance entre le poussoir et le pivot, un accrochage 5 pour le câble 6. La gaine 7 du câble vient en appui sur une butée 8 solidaire de la poignée. On a représenté en 9 un ressort de rappel placé à l'extrémité du câble 6 qui est à l'opposé du point d'accrochage 5. On a représenté en pointillés, avec les repères 3′, 4′, 5′, 6′ la position du levier et des pièces associées dans leur position extrême active, ou de fin de course, ainsi que le pouce de l'utilisateur. Les mêmes pièces sont représentées en trait plein dans la position de repos, ou de début de course.

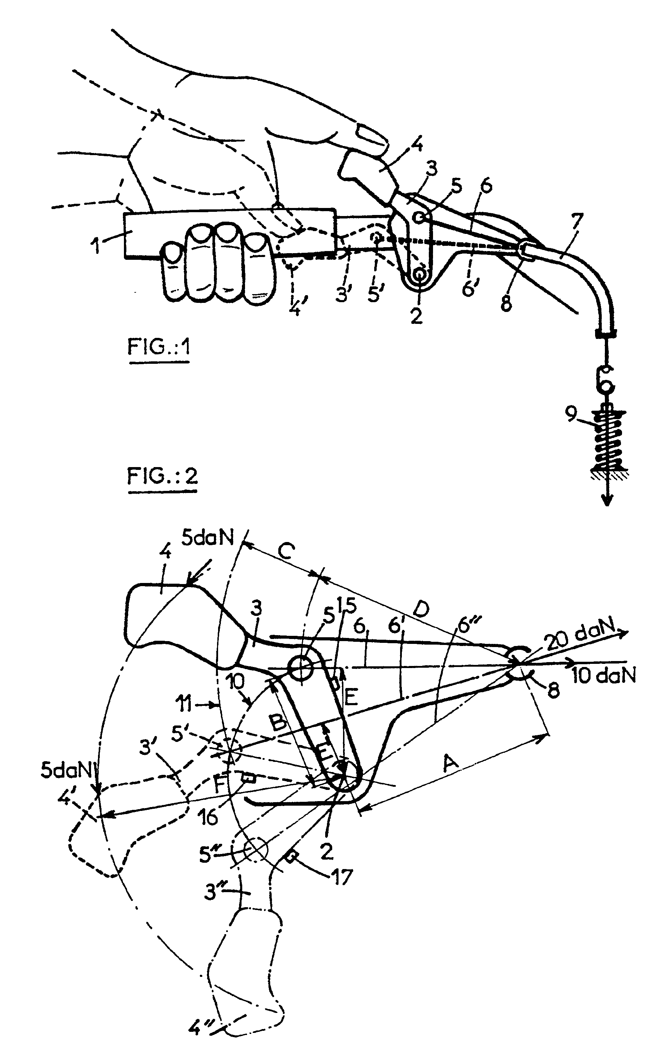

La figure 2 est destinée à illustrer un mode de détermination géométrique des paramètres de dimension et de position des différents éléments et peu donc être considérée comme représentant une épure de calcul.

Cette détermination peut se faire de la façon suivante, qui est donnée à titre d'illustration.

Supposons fixées à l'avance la distance A du pivot 2 à la butée 8 de la gaine, et la distance B du pivot 2 au point d'accrochage 5 du câble sur le levier. On choisit un point d'accrochage arbitraire 5 sur le cercle 10 centré au pivot 2 et de rayon B. On détermine la distance D de la butée 8 à ce point d'accrochage. L'intersection d'un cercle 11 centré sur la butée et de rayon D + C, C étant la course prévue pour le câble, avec le premier cercle 10, donnera la position de fin de course 5′ du point d'accrochage. Il suffit de mesurer les distances E, E′ du pivot 2 aux droites 5-8 et 5′-8 représentant les positions initiale 6 et finale 6′ du câble, de comparer leur rapport au rapport des valeurs de la force du ressort dans les positions extrêmes. Par tâtonnement, on peut déterminer la position correcte du point 5. On peut aussi choisir le ressort 9 en fonction du résultat de l'épure.

Une deuxième opération consistera à "placer" la poignée et le poussoir par rapport à l'épure. On connaît la course moyenne du pouce : sa longueur est de l'ordre de 100 mm. La souplesse des articulations fait que la forme de la trajectoire peut varier dans des limites assez larges. Toutefois, il est à éviter que cette trajectoire corresponde à un arc-de-cercle, à convexité tournée vers la main, ayant un angle au sommet de plus de 60°.

Dans le cas illustré, la force du ressort 9 était de 10 daN en début de course, et de 20 daN en fin de course. Comme on désirait une force demandée au pouce de l'ordre de 5 daN en début et fin de course, on a donné à la longueur F du levier, c'est-à-dire de la distance du pivot 2 au poussoir 4, une valeur de 80 mm, double de la distance E, qui était de 40 mm et quadruple de la distance E' qui était de 20 mm. L'angle de pivotement du levier entre ses positions extrêmes a été établi à 57° environ.

L'étude des mouvements du pouce a montré que, si le levier 3 était rectiligne, la droit joignant les points 2 et 8 devrait faire un angle important, de l'ordre de 70° avec la poignée 1 d'ou un encombrement qui pourrait être gênant. On a supprimé cet inconvénient en coudant le levier 3 à 135° environ en direction de la poignée. Le pivot 2 et la butée 8 se trouvent alors à faible distance de l'axe de la poignée 1. Un autre avantage réside dans le fait que le câble fait toujours un angle faible avec la direction de l'axe de la poignée, si bien que l'extrémité de sa gaine 7 peut elle-même être maintenue à peu près en prolongement de la poignée, comme on peut le voir sur la figure 1.

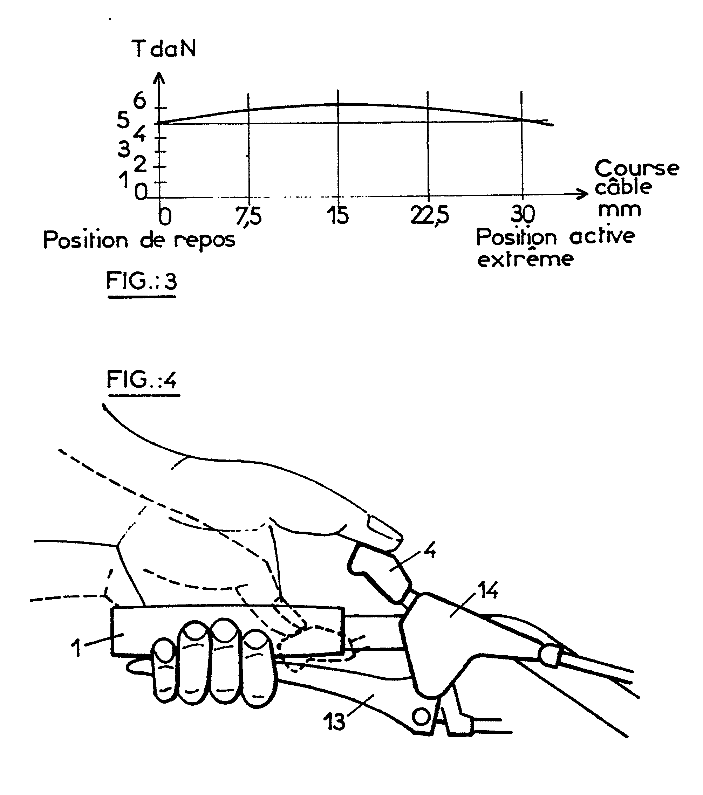

La figure 3 est un diagramme des efforts du pouce qui ont été mesurés dans l'exemple décrit plus haut. On constate que l'effort aux deux extrémités de la course est de 5 daN, conformément au but cherché, et que l'effort maximal, à peu près à mi-course, est de 6 daN environ, ce qui est tout à fait acceptable.

Dans la pratique, une application intéressante de l'invention se trouve dans la commande de déclabotage des roues d'un motoculteur pour le diriger : un dispositif selon l'invention est disposé sur chacune des poignées de guidage du motoculteur, lesquelles sont fixes par rapport à celui-ci. Par déclabotage de l'une ou l'autre des roues, on fait tourner le motoculteur à gauche ou à droite.

Les poignées fixes sont, en outre, équipées de poignées mobiles, telles que la poignée 13 qui est visible à la figure 4, et qui servent à commander la vitesse du moteur et l'embrayage de l'outil.

La figure 4 montre en outre le capot de protection 14 du pivot 2, du levier 3 et du câble 6.

On notera que le câble 6 peut être remplacé, à son extrémité qui est reliée à l'accrochage 5, par une tringle sans sortir du cadre de l'invention. La distance du pivot au câble devient alors éventuellement la distance du pivot à l'axe de la tringle.

Dans ce qui a été dit plus haut, la course du levier et des pièces associées entre leur position de repos 3, 4, 5, 6 et leur position extrême active 3', 4', 5', 6' est limitée par des butées 15, 16, qui peuvent se trouver soit sur la poignée fixe 1, comme représenté, soit vers l'extrémité opposée du câble 6.

Dans une variante, la butée 16, qui définit la position extrême active, peut être franchie moyennant un faible effort supplémentaire et une autre butée 17, infranchissable, définit une nouvelle position extrême 3", 4", 5", 6" représentée en traits interrompus à la figure 2. Cette nouvelle position extrême a pour particularité que le câble 6 s'y trouve au-delà du pivot 2 par rapport à la situation qu'il occupe dans les positions décrites précédemment.

Par effet de "point mort dépassé", cette position est stable par elle-même.

On notera que la force nécessaire pour déplacer le levier entre les positions 3' et 3" est inférieure à celle qui intervient entre les positions 3 et 3', et va même jusqu'à s'annuler.

## Revendications

1. Dispositif de commande d'un appareillage, par un câble (6) coulissant dans une gaine, comportant une poignée fixe (1), destinée à servir d'appui pour la paume de la main d'un utilisateur, cette poignée fixe pouvant être associée à une poignée mobile (13) qui peut être actionnée par les autres doigts que le pouce, et comportant un poussoir (4) susceptible d'être déplacé par le pouce de la même main, ce poussoir étant porté par un levier (3) qui peut tourner sur un pivot (2) solidaire de la poignée fixe de façon à faire décrire au poussoir un arc de cercle de dimension compatible avec la conformation de la main, entre une position extrême de repos et une position extrême active, le levier étant relié audit câble de commande (6) dont la gaine (7) vient en appui sur une butée (8) solidaire de la poignée fixe, un ressort de rappel (9) agissant sur les autres extrémités du câble et de la gaine en opposant une force variable au déplacement du levier, caractérisé en ce que

— le câble (6) est accroché directement sur le levier (3),

— la position du point d'accrochage (5) du câble sur le levier et la distance entre le pivot (2) et la butée (8) sont calculées de telle sorte que les distances du pivot au câble dans la position de repos (E) et dans la position extrême active (E') sont dans un rapport inverse des forces exercées par le ressort de rappel lorsque le levier est dans ladite position repos et ladite position extrême active, si bien que la force que doit exercer le pouce est la même dans ces deux positions extrêmes.

2. Dispositif selon la revendication 1, caractérisé en ce que le levier (3) est coudé et en ce que le câble (6, 6') reste avec un faible écart angulaire par rapport à l'axe de la poignée pendant le mouvement du poussoir (4).

3. Dispositif selon l'une des revendications 1 ou 2, caractérisé en ce que des moyens sont prévus pour prolonger la course du levier jusqu'à une position stable de point mort dépassé et pour arrêter le levier dans cette position.

4. Motoculteur à deux roues motrices pourvues chacune d'un appareillage de clabotage, caractérisé en ce que cet appareillage de clabotage est commandé par un dispositif selon l'une des revendications 1 à 3.

## Patentansprüche

1. Schaltvorrichtung einer Apparatur, zu betätigen über einen in einer Hülle verschiebbaren Bowdenzug (6), ausgestattet mit einem festen Griff (1), welcher als Auflage für die Handfläche eines Benutzers dient, wobei dieser feste Griff mit einem beweglichen Griff (13) verbunden werden kann, welcher mit den anderen Fingern als dem Daumen betätigt werden kann, und welcher einen Drücker (4) aufweist, der mit dem Daumen der selben Hand bewegt werden kann, wobei dieser Drücker von einem Hebel (3) getragen wird, der sich auf einem, mit dem festen Handgriff aus einem Stück bestehenden Drehbolzen (2) derart drehen kann, daß der Drücker einen Kreisbogen beschreibt, welcher der Gestaltung der Hand entspricht, zwischen einer äußersten Ruhestellung und einer äußersten Aktivstellung, wobei der Hebel mit dem genannten Betätigungsbowdenzug (6) verbunden ist, dessen Hülle (7) auf einem, mit dem festen Handgriff aus einem Stück bestehenden Anschlag (8) aufliegt, wobei eine Rückholfeder (9) die anderen Enden des Bowdenzugs und der Hülle beaufschlagt, indem der Bewegung des Hebels eine variable Kraft entgegengesetzt wird, dadurch gekennzeichnet, daß

— der Bowdenzug (6) direkt an dem Hebel (3) aufgehängt ist,

— die Stellung des Aufhängepunkts (5) des Bowdenzugs an dem Hebel und der Abstand zwischen dem Drehbolzen (2) und dem Anschlag (8) so berechnet sind, daß die Abstände des Drehbolzens zum Bowdenzug in der Ruhestellung (E) und in der äußersten Aktivstellung (E') in einem umgekehrten Verhältnis zu den, durch die Rückholfeder ausgeübten Kräften stehen, wenn sich der Hebel in der besagten Ruhestellung und in der besagten äußersten Aktivstellung befindet, und zwar derart, daß die Kraft, die der Daumen ausüben muß, in den beiden Extremstellungen gleich ist.

2. Vorrichtung nach Anspruch 1, dadurch gekennzeichnet, daß der Hebel (3) abgewinkelt ist und dadurch, daß der Bowdenzug (6, 6') während der Bewegung des Drückers (4) in einem geringen, winkeligen Abstand in Bezug auf die Achse des Handgriffs verbleibt.

3. Vorrichtung nach einem der Ansprüche 1 oder 2, dadurch gekennzeichnet, daß Mittel vorgesehen sind, um den Laufweg des Hebels bis zu einer stabilen Stellung des überschrittenen toten Punkts zu verlängern und um den Hebel in dieser Stellung zu arretieren.

4. Zweirad getriebene Bodenfräse mit pro Rad jeweils einer Apparatur zur formschlüssigen Kupplung, dadurch gekennzeichnet, daß diese Apparatur zur formschlüssigen Kupplung über eine Vorrichtung nach einem der Ansprüche 1 bis 3 betätigt wird.

## Claims

1. A control for an apparatus using a cable (6) sliding in a sheath, comprising a fixed handle (1) intended to be used as support for the palm of a user's hand, this fixed handle being associable with a movable handle (13) which is actuable by digits other than the thumb and comprising a button (4) which is movable by the thumb of the same hand, this button being carried by a lever (3) which can turn on a pivot (2) connected to the fixed handle so as to cause the button to describe an arc of a circle of a dimension compatible with the shape of the hand, between an extreme rest position and an extreme actuating position, the lever being connected to said control cable (6) whose sheath (7) is supported on a stop (98) which is connected to the fixed handle, a return spring (9) acting on the opposite extremities of the cable and of the sheath, by producing a variable force in opposition to the movement of the lever, characterised in that

— the cable (6) is directly hooked onto the lever (3),

— the position of the attachment point (5) of the cable to the lever and the distance between the pivot (2) and the stop (8) are determined such that the distances from the pivot to the cable in the rest position (E) and in the extreme actuating position (E') are in an inverse ratio to the forces exerted by the return spring when the lever is in the said rest position and the said extreme actuating position, such that the force which the thumb has to exert is the same in these two extreme positions.

2. A device according to claim 1, characterised in that the lever (3) has an elbow and in that the cable (6, 6') remains at a slight angular spacing in relation to the axis of the handle during the movement of the button (4).

3. A device according to one of claims 1 or 2, characterised in that means are provided to extend the path of the lever up to a stable position beyond the dead point and to stop the lever in this position.

4. A motorised cultivator with two motorised wheels each provided with a dog clutch apparatus, characterised in that this dog clutch apparatus is controlled by a device according to any one of claims 1 to 3.

FIG.:1

FIG.:2

FIG.: 3

FIG.: 4